Europäisches Patentamt

**European Patent Office**

Office européen des brevets

(19)

(11) Veröffentlichungsnummer: **0 270 139 B1**

(12) **EUROPÄISCHE PATENTSCHRIFT**

(45) Veröffentlichungstag der Patentschrift:
**11.04.90**

(51) Int. Cl.⁴: **F16J 1/16**, F02F 7/00, F02F 3/04

(21) Anmeldenummer: **87201926.0**

(22) Anmeldetag: **08.10.87**

(54) **Leichtmetallkolben für Brennkraftmaschinen.**

(30) Priorität: **21.11.86 DE 3639806**

(43) Veröffentlichungstag der Anmeldung:
**08.06.88 Patentblatt 88/23**

(45) Bekanntmachung des Hinweises auf die Patenterteilung:
**11.04.90 Patentblatt 90/15**

(84) Benannte Vertragsstaaten:
**DE**

(56) Entgegenhaltungen:
**DE-A- 3 406 479**
**GB-A- 1 321 045**
**GB-A- 2 165 619**

**PATENT ABSTRACTS OF JAPAN, Band 6,**
**Nr. 56 (M-121)[934], 13. April 1982; &**
**JP-A-56 167 831 (YANMAR DIESEL K.K.) 23-12-1981**

(73) Patentinhaber: **KOLBENSCHMIDT Aktiengesellschaft,**
**Karl-Schmidt-Strasse 8/12 Postfach 1351,**
**D-7107 Neckarsulm(DE)**

(72) Erfinder: **Mieike, Siegfried, Dr., Leipziger Strasse 111,**
**D-7107 Neckarsulm(DE)**
Erfinder: **Seitz, Norman, Untere Halde 20,**
**D-7101 Untereisesheim(DE)**

(74) Vertreter: **Rieger, Harald, Dr., Reuterweg 14,**
**D-6000 Frankfurt a.M.(DE)**

## Beschreibung

Die Erfindung betrifft einen Leichtmetallkolben für Brennkraftmaschinen, insbesondere für Dieselmotoren, mit einer im Bereich jeder Nabe der Bolzenaugen eingegossenen Einlage eines Faser- bzw. Whiskerformkörpers.

Infolge der Steigerung der Zünddrücke bei modernen Brennkraftmaschinen ist es notwendig, die Festigkeit der im allgemeinen aus herkömmlichen Aluminium-Silizium-Legierungen gegossenen Leichtmetallkolben durch konstruktive Maßnahmen, insbesondere im Bereich der Kontaktfläche zwischen Kolbenbolzen und Kolben, zu erhöhen. Selbst bei einer auf hohe Belastungen ausgerichteten Bemessung der Lagerung des Kolbenbolzens in den Naben der Bolzenaugen, z.B. eine Pleuelbreite von 35 %, einen Kolbenbolzen-Durchmesser von 42 % und eine maximal mögliche Bolzenlänge von 82 % des Kolbendurchmessers mit einer Lagerfläche (Durchmesser × Auflagelänge) von etwa 22 % der Kolbenbodenfläche, führt ein maximaler Verbrennungsdruck von 150 bis 170 bar zu einer spezifischen Flächenbelastung in den Naben der Bolzenaugen von 680 bis 770 bar. Diese Werte liegen über der Grenze von etwa 650 bar, für die der gegossene Leichtmetallkolben mit herkömmlicher Konstruktion der Naben der Bolzenaugen unter Voraussetzung ausreichender Dehnlänge von über 20 % des Kolbendurchmessers sicher auslegbar ist. Um die kostengünstige Bauweise des Leichtmetallkolbens auch unter höheren Belastungen beibehalten zu können, ist es bekannt, durch konische Aufweitung des pleuelseitigen Teils der Bohrung der Naben der Bolzenaugen (DE-B 21 52 462) oder durch einen entsprechenden Einzug im Bereich der Innenkante der Naben der Bolzenaugen am Kolbenbolzen eine gleichmäßigere Verteilung der erheblichen Flächenpressungen zu erreichen (Z.: MTZ Motortechnische Zeitschrift 42, Nr.10/1981, S.409-412, Franckhsche Verlagshandlung Stuttgart). Die Veränderung der Spannungsverteilung im Bereich der Kontaktfläche zwischen Kolbenbolzen und Kolben hat allerdings in nachteiliger Weise auch Rückwirkungen auf die Spannungen an anderer Stelle des Leichtmetallkolbens. So kommt es bei Leichtmetallkolben mit im Kolbenboden angebrachter Brennraummulde zu einem Spannungsanstieg an den unter Gaskraft maximal belasteten Stellen des Muldenrandes, sowohl in Druck-Gegendruck-Richtung als auch in etwa gleichem Maße in Bolzenrichtung.

Um dennoch ohne Änderungen des Werkstoffs höhere Verbrennungsdrücke aufnehmen zu können, ist vorgesehen, eine partielle Faserverstärkung vorzugsweise am Kolbenboden, Ringfeld, Nabe und Schaft vorzunehmen (Firmenschrift: 75 Jahre Kolbenschmidt, S.47, Kolbenschmidt AG Neckarsulm, 1985). Faserverstärkte Leichtmetallkolben besitzen zwar bessere mechanisch-technologische Eigenschaften verglichen mit Leichtmetallkolben aus den üblichen Aluminiumlegierungen, jedoch ist der Aufwand für ihre Herstellung deutlich höher.

Es ist deshalb die Aufgabe der vorliegenden Erfindung, bei Leichtmetallkolben mit im Bereich der Naben der Bolzenaugen eingegossener Faserbzw. Whiskerverstärkung einen Kompromiß zwischen den durch die Faser- bzw. Whiskerverstärkung verbesserten mechanischen Kennwerten, wie Schwingungsfestigkeit, Verschleißfestigkeit sowie thermische Ausdehnung, einerseits und andererseits dem Aufwand für das Eingießen der Faserbzw. Whiskerverstärkung zu schaffen.

Gelöst ist diese Aufgabe in der Weise, daß die ausschließlich oberhalb der die Bolzenrichtung umfassenden Horizontalebene eingegossenen Einlagen sich beidseitig der die Bolzenrichtung und die Kolbenachse umfassenden Ebene und über die tragende Länge der Naben der Bolzenaugen, vorzugsweise beginnend im Bereich von deren Innenkanten, erstrecken.

Die vorzugsweise Ausbildung der erfindungsgemäßen Maßnahme besteht darin, daß das pleuelseitige Ende der Einlagen einen Abstand von höchstens $0,5 \times d_B$ ($d_B$ = Bolzendurchmesser), vorzugsweise 0 bis $0,12 \times d_B$, von der die Bolzenrichtung umfassenden Horizontalebene besitzt.

Im Rahmen der vorzugsweisen Ausgestaltung der Erfindung besitzt die Einlage in Richtung der Kolbenachse eine Länge von mindestens $0,5 \times d_B$, vorzugsweise 0,75 bis $1,75 \times d_B$.

Die sich beidseitig der die Bolzenrichtung und die Kolbenachse umfassenden Ebene erstreckenden Einlagen besitzen jeweils eine Breite von mindestens $0,25 \times d_B$, vorzugsweise $0,49 \times d_B$.

In besonderen Belastungsfällen kann die Breite der Einlage so groß ausgelegt sein, daß die Stützrippen der Naben der Bolzenaugen mit umfaßt sind.

Nach einem weiteren Merkmal der Erfindung erstreckt sich die Einlage über mindestens 25%, vorzugsweise 40 bis 50%, der tragenden Länge der Naben der Bolzenaugen; falls erforderlich, kann die Einlage auch über die ganze tragende Länge der Naben der Bolzenaugen ausgedehnt sein.

Zweckmäßigerweise sind die Fasern der Faserformkörper parallel zu einer Ebene, vorzugsweise zur Ebene des Kolbenbodens, hin ausgerichtet, wobei innerhalb dieser Ebene ihre Orientierung vorzugsweise statistisch regellos ist.

Als besonders geeignet für die Herstellung der selektiven Faserverstärkung haben sich Faserformkörper aus $Al_2O_3$ und Whiskerformkörper aus $SiC$ erwiesen. Der Verwendung aus anderen Fasern bzw. Whiskern, wie z.B. Aluminiumsilikat- und Stahlfasern sowie Kaliumtitanat-, Aluminiumoxidund Siliziumnitrid-Whiskern, gebildeten Formkörpern steht nichts im Wege.

Die mit der Erfindung erzielten Vorteile bestehen insbesondere darin, daß durch die partielle Faserbzw. Whiskerverstärkung des Leichtmetallkolbens im Bereich der Naben der Bolzenaugen die herkömmliche Gießtechnologie für Leichtmetallkolben eingesetzt werden kann und eine gute Penetrierung der Faser- bzw. Whiskerformkörper mit dem Leichtmetall erreicht wird, wobei die durch die Einlagen erzielten guten mechanisch-technologischen Eigenschaften gewährleistet sind.

Der erfindungsgemäß gestaltete Leichtmetallkolben ist in der Zeichnung beispielhaft dargestellt. Es zeigen

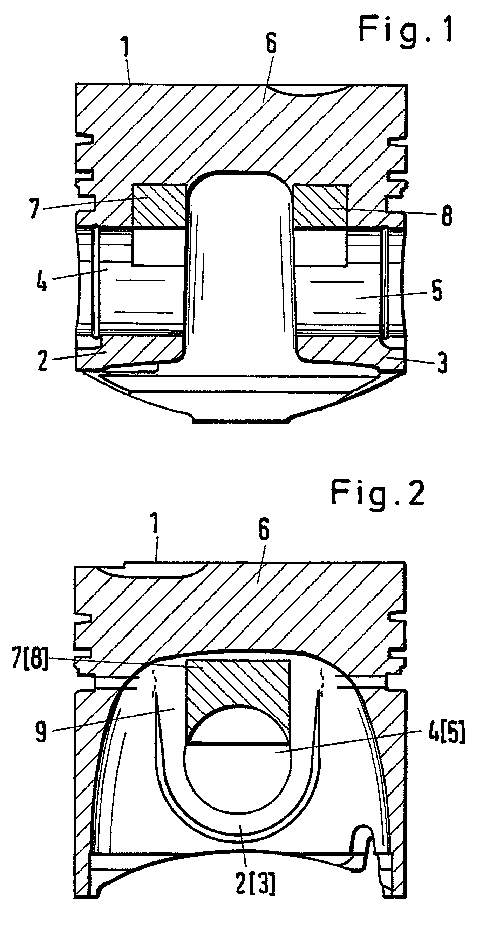

Fig.1 einen Schnitt entlang der die Kolbenachse und die Bolzenrichtung einschließenden Ebene,
Fig.2 einen Schnitt entlang der die Kolbenachse und die Richtung senkrecht zur Bolzenrichtung einschließenden Ebene.

Bei dem aus einer Aluminium-Silizium-Legierung des Typs AlSil2CuNiMg gegossenen Leichtmetallkolben (1) ist in den Naben (2,3) der Bolzenaugen (4,5) im Abstand von $0,5 \times d_B$ von der die Bolzenrichtung einschließenden Horizontalebene in Richtung zum Kolbenboden (6) hin jeweils ein $0,75 \times d_B$ langer und $0,95 \times d_B$ breiter Faserkörper (7,8) aus $Al_2O_3$-Fasern eingegossen, der sich über 60 % der tragenden Länge der Naben (2,3) der Bolzenaugen (4,5), beginnend an deren Innenkante, erstreckt. Die Einlagen (7,8) erstrecken sich bis etwa zur inneren Begrenzung der Stützrippen (9). Die $Al_2O_3$-Fasern sind parallel zur Kolbenbodenebene ausgerichtet, innerhalb dieser Ebene ist die Orientierung statistisch regellos. Für beliebige Richtungen innerhalb dieser Ebene verhält sich der Werkstoff isotrop. Im Bereich der Faserkörper beträgt das Verhältnis von Leichtmetall zu Fasern 80 : 20.

**Patentansprüche**

1. Leichtmetallkolben für Brennkraftmaschinen, insbesondere für Dieselmotoren, mit einer im Bereich jeder Nabe der Bolzenaugen eingegossenen Einlage eines Faser- bzw. Whiskerformkörpers, dadurch gekennzeichnet, daß die ausschließlich oberhalb der die Bolzenrichtung umfassenden Horizontalebene eingegossenen Einlagen (7, 8) sich beidseitig der die Bolzenrichtung und die Kolbenachse umfassenden Ebene und mindestens über einen Teil der tragenden Länge der Naben (2, 3) der Bolzenaugen (4, 5) erstrecken.

2. Leichtmetallkolben nach Anspruch 1, dadurch gekennzeichnet, daß das pleuelseitige Ende der Einlagen (7,8) einen Abstand von höchstens $0,5 \times d_B$, vorzugsweise 0 bis $0,12 \times d_B$, von der die Bolzenrichtung umfassenden Horizontalebene (4) besitzt.

3. Leichtmetallkolben nach den Ansprüchen 1 und 2, dadurch gekennzeichnet, daß die Einlagen (7,8) in Richtung der Kolbenachse eine Länge von mindestens $0,5 \times d_B$, vorzugsweise 0,75 bis $1,75 \times d_B$, aufweisen.

4. Leichtmetallkolben nach den Ansprüchen 1 bis 3, dadurch gekennzeichnet, daß sich die beidseitig der die Bolzenrichtung und die Kolbenachse umfassenden Ebene erstreckenden Einlagen (7,8) jeweils eine Breite von mindestens $0,25 \times d_B$, vorzugsweise $0,49 \times d_B$, besitzen.

5. Leichtmetallkolben nach den Ansprüchen 1 bis 4, dadurch gekennzeichnet, daß die Einlagen (7,8) eine die Stützrippen (9) miteinschließende Breite besitzen.

6. Leichtmetallkolben nach den Ansprüchen 1 bis 5, dadurch gekennzeichnet, daß sich die Einlagen (7,8) über mindestens 25 %, vorzugsweise 40 bis 50 %, der tragenden Länge der Naben (2,3) der Bolzenaugen (4,5) erstrecken.

7. Leichtmetallkolben nach Anspruch 6, dadurch gekennzeichnet, daß sich die Einlagen (7,8) über die ganze tragende Länge der Naben (2,3) der Bolzenaugen (4,5) erstrecken.

8. Leichtmetallkolben nach den Ansprüchen 1 bis 7, dadurch gekennzeichnet, daß die Fasern der Einlagen (7,8) parallel zu einer Ebene, vorzugsweise zum Kolbenboden, hin ausgerichtet sind.

**Revendications**

1. Piston en métal léger pour moteurs à combustion interne, notamment pour moteurs diesel, comportant un insert, coulé au voisinage de chaque moyeu des bossages d'axe de piston, d'un corps moulé comportant des fibres ou des whiskers, caractérisé par le fait que les inserts (7, 8) coulés exclusivement au-dessus du plan horizontal contenant la direction de l'axe de piston, s'étendent des deux côtés du plan inculant la direction de l'axe de piston et l'axe du piston et s'étendant au moins sur une partie de la longueur portante des moyeux (2, 3) des bossages (4, 6) d'axe de piston.

2. Piston en métal léger suivant la revendication 1, caractérisé par le fait que la distance entre l'extrémité des inserts (7, 8), située du côté de la bielle, et le plan horizontal (4) contenant la direction de l'axe de piston est égale au maximum à $0,5 \times d_B$ et est comprise de préférence entre 0 et $0,12 \times d_B$.

3. Piston en métal léger suivant les revendications 1 et 2, caractérisé par le fait que les inserts (7, 8) possèdent, dans la direction de l'axe du piston, une longueur égale à au moins $0,5 \times d_B$ et est comprise de préférence entre 0,75 et $1,75 \times d_B$.

4. Piston en métal léger suivant les revendications 1 à 3, caractérisé par le fait que les inserts (7, 8), qui s'étendent des deux côtés du plan contenant la direction de l'axe de piston et l'axe du piston, possèdent respectivement une largeur égale à au moins $0,25 \times d_B$ et de préférence à $0,49 \times d_B$.

5. Piston en métal léger suivant les revendications 1 à 4, caractérisé par le fait que les inserts (7, 8) possèdent une largeur qui inclut simultanément les nervures de support (9).

6. Piston en métal léger suivant les revendications 1 à 5, caractérisé par le fait que les inserts (7, 8) s'étendent sur une distance égale à au moins 25% et de préférence comprise entre 40 et 50% de la longueur portante des moyeux (2, 3) des bossages (4, 5) d'axe de piston.

7. Piston en métal léger suivant la revendication 6, caractérisé par le fait que les inserts (7, 8) s'étendent sur toute la longueur portante des moyeux (2, 3) des bossages (4, 5) d'axe de piston.

8. Piston en métal léger suivant les revendications 1 à 7, caractérisé par le fait que les fibres des inserts (7, 8) sont orientées parallèlement à un plan, de préférence à la tête de piston.

## Claims

1. A light alloy piston for internal combustion engines, particularly for diesel engines, comprising an insert which consists of a shaped member of fibres and/or whiskers and is embedded in the casing adjacent to each hub of the pin bosses, characterized in that the inserts (7, 8) are embedded in the casting only above the horizontal plane which includes the direction of the pin and extend on both sides of the plane which includes the direction of the pin and the axis of the piston and said inserts extend at least over part of the carrying length of the hubs (2, 3) of the pin bosses (4, 5).

2. A light alloy piston according to claim 1, characterized in that the connecting rod end of the inserts (7, 8) is a spaced a distance not in excess of 0.5 $d_B$, preferably 0 to 0.12 $d_B$, from the horizontal plane (4) which includes the direction of the pin.

3. A light alloy piston according to claims 1 and 2, characterized in that the inserts (7, 8) have in the direction of the axis of the piston a length of at least 0.5 $d_B$, preferably of 0.75 to 1.75 $d_B$.

4. A light alloy piston according to claims 1 to 3, characterized in that each of the inserts (7, 8) extending on both sides of the plane which includes the direction of the pin and the axis of the piston has a width of at least 0.25 $d_B$, preferably 0.49 $d_B$.

5. A light alloy piston according to claims 1 to 4, characterized in that the inserts (7, 8) has a width which includes also the supporting ribs (9).

6. A light alloy piston according to claims 1 to 5, characterized in that the inserts (7, 8) extend over at least 25%, preferably 40 to 50%, of the carrying length of the hubs (2, 3) of the pin bosses (4, 5).

7. A light alloy piston according to claim 6, characterized in that the inserts (7, 8), extend throughout the carrying length of the hubs (2, 3) of the pin bosses (4, 5).

8. A light alloy piston according to claims 1 to 7, characterized in that the fibers of the inserts (7, 8) extend parallel to a plane, preferably toward the piston head.

Fig.1

Fig.2